# FASCICULE DE BREVET EUROPEEN

(11) **EP 0 602 202 B1**
(45) Date de publication et mention de la délivrance du brevet: **13.11.1996**
(21) Numéro de dépôt: 93912538.1
(22) Date de dépôt: 02.07.1993
(51) Int. Cl.: C08J 11/06, B29B 17/02, G11B 7/26

(54) **PROCEDE DE VALORISATION DE DECHETS D'UNE MATIERE SYNTHETIQUE CONTAMINES PAR D'AUTRES MATERIAUX**
Verfahren zur Verwertung von synthetischem Abfallmaterial, kontaminiert durch andere Materiale
METHOD FOR RECOVERING A SYNTHETIC WASTE MATERIAL CONTAMINATED WITH OTHER MATERIALS

(30) Priorité: 03.07.1992 FR 9208413
(43) Date de publication de la demande: 22.06.1994
(73) Titulaire: HELVEREP S.A., CH-1400 Yverdon-les Bains (CH)
(72) Inventeur: FRANCI, François-Marie, F-77340 Pontault-Combault (FR)
(74) Mandataire: Nithardt, Roland
(86) Numéro de dépôt international: CH9300169
(87) Numéro de publication internationale: WO9401491

(56) Documents cités:
- DE-A- 3 511 711
- GB-A- 2 130 124
- US-A- 4 368 274
- US-A- 4 602 046
- CHEMICAL ABSTRACTS, vol. 90, no. 6, 1979, Columbus, Ohio, US; abstract no. 39898g, SADAYOSHI & AL. 'recovery of base films from magnetic recording materials'; & JP-A-53 112 979

## Description

La présente invention concerne un procédé de valorisation de déchets d'une matière synthétique contaminés par d'autres matériaux dans lequel on effectue simultanément un traitement chimique par imprégnation desdits autres matériaux au moyen d' une solution chimique agressive à l'égard de ces matériaux et sensiblement neutre à l'égard de la matière synthétique, et un traitement mécanique en brassant ces déchets en vrac, non préalablement broyés, dans un tambour rotatif hermétiquement fermé.

Les déchets de matière synthétique sont habituellement contaminés par d'autres matériaux tels qu'une ou plusieurs peintures, des encres d'impression, des revêtements métalliques, des étiquettes en papier ou autres matériaux, des colles, etc... Un recyclage "propre" consiste à décontaminer la matière synthétique de base en vue de sa réutilisation.

Actuellement les essais de valorisation ont consisté à effectuer un traitement chimique au cours duquel les déchets sont immergés dans une solution agressive pendant un temps plus ou moins long dans le but de neutraliser les matériaux parasites. Pendant ce traitement, la matière synthétique s'imprègne de solution et se dégrade en partie, ce qui la rend la plupart du temps non réutilisable.

Le recyclage des matières synthétiques est d'autant plus intéressant que le matériau de base est plus noble et plus coûteux. Les polycarbonates utilisés pour la fabrication des disques à lecture optique figurent parmi ces matériaux particulièrement intéressants à recycler.

De nombreux essais ont été faits pour recycler le polycarbonate ou d'autres matières synthétiques. A ce titre on peut citer la demande de brevet allemand DE-A-35 11 711 qui décrit un procédé de récupération de la matière synthétique des disques à lecture optique, dans lequel on immerge les déchets préalablement broyés dans un bain contenant divers produits chimiques ayant des propriétés décapantes.

Le brevet américain US-A-4 602 046 décrit un procédé de traitement de pièces en matières synthétiques recouvertes d'au moins une couche d'un polymère organique macromoléculaire, dans lequel on effectue un brassage de particules broyées obtenues par un broyage fin desdites pièces, dans une solution de soude caustique. Le mélange comporte 25% de matière solide pour 75% de solution alcaline.

On constate que dans tous les procédés connus, on immerge la matière à recycler préalablement broyée ou micronisée dans des solutions agressives, ce qui a pour effet non seulement de décaper les matières à éliminer mais également d'imprégner les matériaux à recycler, ce qui constitue un inconvénient majeur.

La présente invention se propose de pallier cet inconvénient en offrant un procédé qui permet de traiter efficacement les déchets de matières synthétiques tout en les préservant d'une dégradation occasionnée par les substances agressives de traitement.

Dans ce but le procédé selon l'invention est caractérisé en ce que la quantité de ladite solution chimique représente entre 2 et 5% en poids de la quantité des déchets traités.

Lorsque lesdits déchets sont des disques du type à lecture optique ayant un support en polycarbonate, ladite solution chimique est avantageusement composée de 20% de soude caustique à 36° et de 80% d'eau et l'on effectue ce traitement pendant 3 à 5 heures.

Dans une forme de mise en oeuvre préférée du procédé l'on effectue au moins un rinçage au moyen d'un volume de liquide compris entre 25% et 100% du volume des déchets traités suivi d'un séchage par air chaud desdits déchets.

De façon avantageuse l'on effectue ensuite une filtration du liquide de rinçage au moyen d'un filtre à plaques.

Dans une forme de réalisation avantageuse du procédé l'on effectue le traitement chimique et mécanique dans un premier tambour rotatif, le rinçage suivi du séchage dans un second tambour rotatif et l'on effectue un broyage des déchets après leur rinçage suivi du séchage.

L'invention sera mieux comprise en référence à la description d'un exemple d'un mode de mise en oeuvre du procédé et d'une forme de réalisation avantageuse d'un dispositif permettant d'effectuer cette mise en oeuvre.

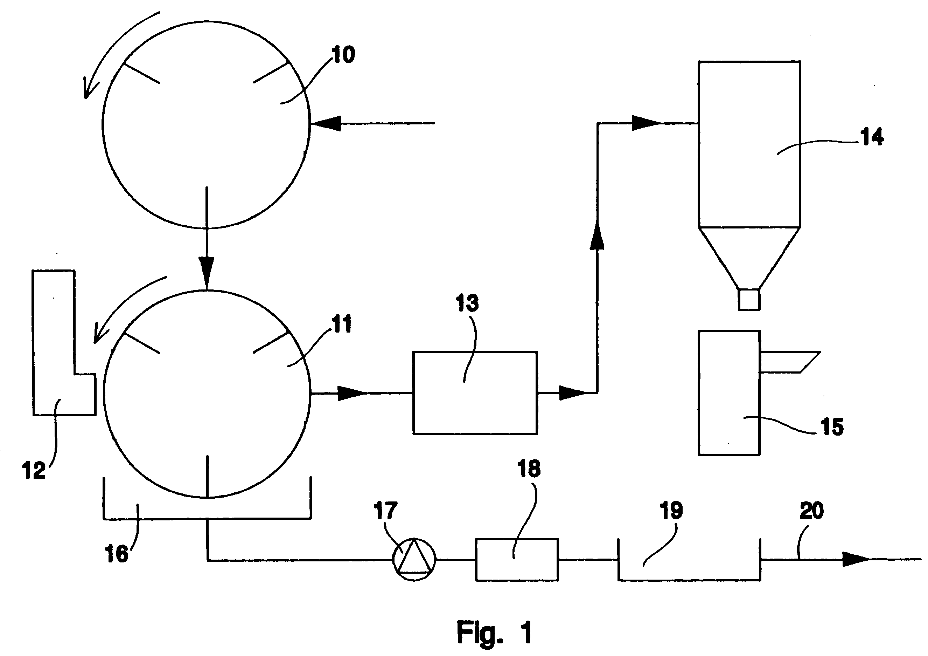

Ce dispositif est illustré en figure 1 par un schéma de principe et sera décrit plus en détail ci-dessous.

Comme mentionné ci-dessus, le procédé combine l'agression chimique des matériaux parasites qui contaminent la matière synthétique que l'on souhaite récupérer avec un décapage mécanique dû au brassage des produits dans un tambour rotatif. En raison de la faible quantité de solution chimique agressive utilisée par rapport au volume de produits à traiter, ces produits ne subissent qu'une simple enduction et ne peuvent en aucun cas s'imprégner de cette solution. En effet, même si une partie des déchets est momentanément immergée, elle en ressort immédiatement du fait de la rotation du tambour. Après cette courte phase d'immersion, les produits à traiter sont égouttés. De ce fait la solution n'a qu'un effet de surface c'est-à-dire que sur les matériaux parasites et ne provoque aucune dégradation de la matière synthétique noble, c'est-à-dire celle que l'on veut récupérer.

Les chocs provoqués par les déchets en rotation assurent un décapage des matériaux parasites qui sont déjà fragilisés lors de l'agression par la solution chimique. Ces matériaux se détachent de la surface des déchets traités et sont micronisés par la multitude de chocs qu'ils subissent. Un rinçage final suivi d'une ou de plusieurs filtrations permet de les éliminer totalement.

La solution chimique agressive utilisée dépend des matériaux à éliminer et tient compte de la résistance de la matière synthétique face à cette solution de traitement.

Comme mentionné précédemment, une des matières synthétiques qu'il est particulièrement avantageux de récupérer est le polycarbonate qui sert de base aux disques à lecture optique. Ces disques sont imprimés sur une face et l'autre face porte une pellicule d'aluminium protégée par une couche de résine.

Des essais concluants ont été effectués sur des volumes de 2m3 de déchets des disques à lecture optique introduits dans un tambour rotatif ayant une capacité de 6m3. La solution chimique est constituée de 20% de soude caustique à 36° et de 80% d'eau. Le volume de solution introduite dans le tambour est de 20 litres, soit environ 2% du poids total des déchets. La vitesse de rotation du tambour est réglée pour que les déchets remontent aux environs des 3/4 du diamètre du tambour, afin que le brassage soit optimal.

On constate que la couche d'aluminium se dégrade très rapidement et que les encres d'impression forment des écailles qui se détachent de la face du disque. Les particules de matériaux détachés se micronisent et la solution chimique se transforme progressivement en un "jus" homogène contenant les particules de matériaux parasites. L'opération dure environ quatre heures et demie. On effectue ensuite un rinçage à l'eau, également dans un tambour en rotation, suivi d'une filtration. Si nécessaire plusieurs rinçages et filtrations sont effectués jusqu'à l'obtention d'une eau claire à la sortie du tambour. Cette filtration s'effectue avantageusement au moyen d'un filtre à plaques.

Il est certain que les solutions peuvent varier selon les déchets à traiter. Toutefois le principe de traitement reste identique dans tous les cas. On combine l'action chimique avec l'action mécanique et on n'utilise qu'un volume réduit de solution chimique pour ne procéder qu'à une enduction et non une immersion prolongée de la matière synthétique à traiter.

A titre d'exemple, le traitement des disques à lecture optique comprend les phases suivantes:
- Préparation d'une solution alcaline comprenant 20% de soude à 36° et 80% d'eau.
- Préparation d'un volume de disques en vrac, non broyés. Ce volume ne doit pas dépasser 50% du volume total du tambour rotatif utilisé.
- Introduction des disques dans le tambour de traitement.
- Introduction d'un volume de solution dont le poids est compris entre 1 et 2% du poids des déchets à traiter.
- Mise en rotation du tambour.
   La vitesse est choisie pour que les déchets remontent le plus haut possible dans le tambour sans toutefois effectuer un tour complet sous l'effet de la force centrifuge. L'opération de traitement mécanique et chimique dans le tambour dure entre 2 et 5 heures, jusqu'à ce que les couches d'aluminium d'une part et d'encre d'impression d'autre part soient entièrement détachées et forment une boue avec la solution de traitement.
- Transvasement du contenu du tambour de traitement dans le tambour de rinçage.
- Rinçage à grande eau dans le tambour entraîné en rotation, jusqu'au moment où les disques sont propres.
- Evacuation des eaux de rinçage et séchage des disques à l'intérieur du tambour entraîné en rotation, ces disques étant soumis à un courant d'air chaud.
- Evacuation des disques secs vers un broyeur mis en silo de stockage.
- Filtration des eaux de rinçage et nettoyage du filtre à plaques.

Le dispositif pour la mise en oeuvre du procédé ci-dessus comporte un tambour rotatif de traitement 10 dans lequel s'effectue le traitement chimique doublé d'une action mécanique de décapage et un tambour rotatif de rinçage 11 dans lequel les disques décapés sont rincés et séchés. A cet effet, une soufflerie d'air chaud 12 est associée au tambour 11. Ce dispositif comprend par ailleurs un broyeur 13 et un silo de stockage 14 associé à un dispositif de conditionnement 15 des déchets broyés.

Il comporte enfin un bac 16 de récupération du liquide de rinçage, disposé en aval du tambour 11, une pompe 17 pour amener ce liquide vers un filtre à plaques 18 à la sortie duquel est disposé un bac de décantation 19 pourvu d'une sortie d'évacuation 20 dudit liquide qui peut éventuellement être retraité en vue d'une réutilisation.

Le traitement des déchets selon le procédé de l'invention peut également se faire en n'utilisant qu'un seul tambour en rotation pour le traitement chimique et le rinçage. Dans ce cas l'évacuation du "jus" résultant s'effectue à travers un joint tournant.

## Revendications

1. Procédé de valorisation de déchets d'une matière synthétique contaminés par d'autres matériaux, dans lequel l'on effectue simultanément un traitement chimique par imprégnation desdits autres matériaux au moyen d'une solution chimique agressive à l'égard de ces matériaux et sensiblement neutre à l'égard de la matière synthétique, et un traitement mécanique en brassant ces déchets en vrac, non préalablement broyés, dans un tambour rotatif hermétiquement fermé, caractérisé en ce que la quantité de ladite solution chimique représente entre 2 et 5% en poids de la quantité des déchets traités.

2. Procédé selon la revendication 1, dans lequel lesdits déchets sont des disques du type à lecture optique ayant un support en polycarbonate, caractérisé en ce que ladite solution chimique est composée de 20% de soude caustique à 36° et de 80% d'eau.

3. Procédé selon la revendication 2, caractérisé en ce que l'on effectue ce traitement pendant 3 à 5 heures.

4. Procédé selon la revendication 3, caractérisé en ce que l'on effectue au moins un rinçage au moyen d'un volume de liquide de rinçage compris entre le 25% et 100% du volume des déchets traités suivi d'un séchage par air chaud des déchets.

5. Procédé selon la revendication 4, caractérisé en ce que l'on effectue une filtration du liquide de rinçage au moyen d'un filtre à plaques.

6. Procédé selon les revendications 1 et 4, caractérisé en ce que l'on effectue le traitement chimique et mécanique dans un premier tambour rotatif et le rinçage suivi du séchage dans un second tambour rotatif.

7. Procédé selon la revendication 1, caractérisé en ce que l'on effectue un broyage des déchets après leur rinçage suivi du séchage.

## Patentansprüche

1. Verfahren zur Verwertung von synthetischem Abfallmaterial, das durch andere Materialien kontaminiert wurde, bei dem gleichzeitig eine chemische Behandlung durch Imprägnierung der anderen Materialien mit Hilfe einer chemischen Lösung, die gegenüber diesen Materialien aggressiv und gegenüber dem synthetischen Material im wesentlichen neutral ist, und eine mechanische Behandlung, bei der das lose Abfallmaterial, das vorher nicht zerkleinert wurde, in einer hermetisch geschlossenen Drehtrommel durchgeführt werden,
**dadurch gekennzeichnet,** daß die Menge der chemischen Lösung zwischen 2 und 5 Gewichts-% der Menge des behandelten Abfallmaterials ausmacht.

2. Verfahren nach Anspruch 1, bei dem das Abfallmaterial aus Platten wie für optische Lesegeräte mit einem Träger aus Polycarbonat besteht,
**dadurch gekennzeichnet,** daß die chemische Lösung zu 20 % aus Ätznatron bei 36° und zu 80 % aus Wasser zusammengesetzt ist.

3. Verfahren nach Anspruch 2,
**dadurch gekennzeichnet,** daß
diese Behandlung während 3 bis 5 Stunden durchgeführt wird.

4. Verfahren nach Anspruch 3,
**dadurch gekennzeichnet,** daß
mindestens ein Spülvorgang mit einer Menge von Spülflüssigkeit zwischen 25 und 100 % der Menge des behandelten Abfallmaterials mit nachfolgender Trocknung durch Warmluft vorgenommen wird.

5. Verfahren nach Anspruch 4,
**dadurch gekennzeichnet,** daß
ein Filtern der Spülflüssigkeit mit Hilfe eines Plattenfilters durchgeführt wird.

6. Verfahren nach den Ansprüchen 1 und 4,
**dadurch gekennzeichnet,** daß
die chemischen und die mechanischen Behandlungen in einer ersten Drehtrommel und der Spülvorgang mit nachfolgender Trocknung in einer zweiten Drehtrommel vorgenommen werden.

7. Verfahren nach Anspruch 1,
**dadurch gekennzeichnet,** daß
nach dem Spülvorgang und der Trocknung das Abfallmaterial zerkleinert wird.

## Claims

1. A method for recovering synthetic waste material contamined with other materials, wherein a chemical treatment which impregnates the other materials with a chemical solution which attacks these materials but is essentially neutral toward the synthetic material, occurs simultaneously with a mechanical treatment consisting of tumbling the loose, uncrushed waste material in a hermetically sealed rotary drum, characterized in that the amount of chemical solution represents from 2 to 5% of the amount of waste treated.

2. A method according to claim 1 wherein the waste material consists of optical character reading disks with a polycarbonate base, characterized in that said chemical solution is composed of 20% caustic soda at 36°C and 80% water.

3. A method according to claim 2 characterized in that the treatment lasts from 3 to 5 hours.

4. A method according to claim 3 characterized in that at least one rinse operation is performed using a rinse liquid ranging in volume from 25% to 100% of the volume of waste being treated, said operation being followed by drying the waste material with hot air.

5. A method according to claim 4 characterized in that the rinse liquid is filtered through a plate filter.

6. A method according to claims 1 and 4 characterized in that the chemical and mechanical treatments take place within a first rotary drum and the rinsing and drying operations within a second rotary drum.

7. A method according to claim 1 characterized in that the waste is crushed after the rinsing and drying operations.
